# DEMANDE DE BREVET EUROPEEN

(11) **EP 1 790 841 A1**
(43) Date de publication de la demande: **30.05.2007**
(21) Numéro de dépôt: 06291776.0
(22) Date de dépôt: 14.11.2006
(51) Int. Cl.: F02D 41/00, F02D 13/06, F02D 17/02

(54) **Procédé pour contrôler l'admission et/ou l'échappement d'au moins un cylindre désactivé d'un moteur à combustion interne**

(30) Priorité: 24.11.2005 FR 0511999
(71) Demandeur: Institut Français du Pétrole, 92852 Rueil Malmaison Cédex (FR)
(72) Inventeur: Pagot, Alain, 92500 Rueil-Malmaison (FR)

(57) **Abrégé**

La présente invention concerne un procédé pour contrôler l'admission et/ou l'échappement d'au moins un cylindre désactivé (10, 12, 14, 16) d'un moteur à combustion interne fonctionnant selon quatre phases, ledit cylindre comprenant des moyens d'admission avec une soupape d'admission (28), des moyens d'échappement avec une soupape d'échappement (34), un moyen d'injection de carburant (42), des moyens d'allumage (48) et un piston coulissant à l'intérieur de ce cylindre entre une position correspondant à son point mort haut (PMHa, PMHd) et une position correspondant à son point mort bas (PMBa, PMHd).

Selon l'invention, pour le fonctionnement du moteur avec des faibles charges ou des charges partielles :
- on ouvre une des soupapes (28, 34) du cylindre désactivé au voisinage d'un point mort haut (PMHa, PMHd),
- on ferme cette soupape au voisinage du point mort haut suivant (PMHd, PMHa).

## Description

La présente invention se rapporte à un procédé permettant de contrôler l'admission et/ou l'échappement d'au moins un cylindre désactivé d'un moteur à combustion interne fonctionnant selon quatre phases.

Cette invention s'applique plus particulièrement à un moteur avec au moins deux cylindres comportant des chambres de combustion dans lesquelles se réalise la combustion d'un mélange carburé. Elle vise notamment les moteurs à injection directe ou indirecte, de type Essence, mais n'écarte en aucune manière les moteurs à injection directe de type Diesel.

Habituellement, un moteur fonctionne avec la totalité de ses cylindres. Cependant, lorsque ce moteur fonctionne à faibles charges ou à charges partielles, le rendement du moteur est dégradé par l'augmentation de la contribution des frottements et du vannage dans le cas des moteurs de type Essence.

Il a été proposé de ne faire fonctionner qu'une partie des cylindres de ce moteur et de rendre inactive la partie restante. Pour ce faire, il est prévu de couper l'injection de carburant uniquement dans les cylindres que l'on souhaite désactiver. Ceci permet de favoriser la réduction de la consommation de carburant en injectant le carburant nécessaire aux seuls cylindres nécessaires à la production d'énergie pour un fonctionnement du moteur à faibles charges ou à charges partielles.

Bien que ce type de fonctionnement du moteur soit satisfaisant, il entraîne cependant des inconvénients non négligeables.

En effet, comme les lois de levée des soupapes d'échappement et d'admission restent inchangées, les différentes phases dites de détente et de compression du ou des cylindres inactifs vont entraîner des dysfonctionnements.
Ainsi, comme cela est connu, lors de la phase de détente habituelle du cylindre d'un moteur, la chambre de combustion de ce cylindre contient un mélange carburé comprimé qui se consume en réalisant une expansion du volume présent dans cette chambre. Pendant cette phase, les soupapes d'échappement et d'admission sont fermées et le piston est entraîné dans un mouvement vers son point mort bas sous l'effet de l'expansion des gaz brûlés en transmettant son énergie au vilebrequin auquel il est relié.
Lorsque l'on coupe l'alimentation en carburant du cylindre à rendre inactif, aucun mélange carburé ne se réalise dans la chambre de combustion et seul est présent un volume d'air comprimé. Lors de la phase de ce cylindre qui correspond à sa phase de détente, le piston ne sera pas soumis à une force résultant de l'expansion des gaz brûlés mais distend uniquement un volume d'air comprimé par la phase précédente de fonctionnement de ce moteur. Cette distension génère un refroidissement de l'air contenu dans le cylindre et cette baisse de température va se transmettre au film d'huile habituellement présent sur la paroi du cylindre. Le film d'huile se refroidit et perd ses qualités de lubrification, notamment au niveau de sa viscosité, et conduit à une mauvaise lubrification entre le piston et le cylindre pouvant provoquer un grippage entre ces deux pièces.
Ce refroidissement est encore plus accentué lors de la phase d'échappement du cylindre inactif, lors du mouvement du piston allant du bas du cylindre vers le haut du cylindre. Durant ce mouvement, l'air détendu froid est poussé par le piston vers la soupape d'échappement et parcourt la surface du film d'huile. Ceci accroît le refroidissement du film d'huile avec une perte plus grande de ses qualités de lubrification. De manière encore plus désavantageuse, cet air sortant de la chambre est envoyé dans la voie d'échappement en introduisant une quantité non négligeable d'oxygène dans les gaz chauds provenant de la combustion des cylindres actifs. Cet apport d'oxygène est non seulement néfaste pour la fiabilité de la mesure de la richesse des gaz d'échappement, dans le cas d'une utilisation d'un moyen de dépollution, mais aussi entraîne un risque de postcombustion des gaz d'échappement si ceux-ci contiennent une quantité résiduelle suffisante de carburant.

De plus, pendant la phase de détente du cylindre inactif, le piston qui coulisse dans ce cylindre n'est plus un piston qui génère de l'énergie à transmettre au vilebrequin. En effet, la chambre de combustion ne contient pas de mélange comprimé carburé qui se détend lors de sa combustion mais uniquement de l'air comprimé. De ce fait, ce piston agit comme un absorbeur d'énergie. En effet, comme aucune combustion ne se produit dans ce cylindre, ce piston est uniquement entraîné, dans un mouvement allant du haut du cylindre vers le bas de ce cylindre, par le vilebrequin qui est soumis à un mouvement de rotation produit par le ou les cylindres actifs. Ces cylindres doivent donc générer une énergie supplémentaire pour réaliser l'entraînement du piston du cylindre désactivé. Ce supplément d'énergie est d'autant plus élevé que les conditions de lubrification du piston dans le cylindre inactif sont dégradées par la détente de l'air comprimé.

La présente invention vise à remédier aux inconvénients ci-dessus mentionnés grâce à un procédé simple et économique permettant de réduire encore plus la consommation de carburant et à minimiser la perte d'énergie due au cylindre inactif.

A cet effet, la présente invention concerne un procédé pour contrôler l'admission et/ou l'échappement d'au moins un cylindre désactivé d'un moteur à combustion interne fonctionnant selon quatre phases, ledit cylindre comprenant des moyens d'admission avec une soupape d'admission, des moyens d'échappement avec une soupape d'échappement, un moyen d'injection de carburant, des moyens d'allumage et un piston coulissant à l'intérieur de ce cylindre entre une position correspondant à son point mort haut et une position correspondant à son point mort bas, caractérisé en ce que, pour le fonctionnement du moteur avec des faibles charges ou des charges partielles :
- on ouvre une des soupapes du cylindre désactivé au voisinage d'un point mort haut,
- on ferme cette soupape au voisinage du point mort haut suivant.

On peut ouvrir la soupape d'échappement au voisinage d'un point mort correspondant au début de la phase de détente du moteur, de façon à admettre des gaz d'échappement dans le cylindre inactif.

Ou peut également ouvrir l'une des soupapes successivement à la fermeture de l'autre des soupapes.

On peut réaliser un croisement entre la soupape d'échappement et la soupape d'admission du cylindre désactivé de façon à réaliser un balayage de l'air frais dans le cylindre inactif.

On peut désactiver au moins un cylindre en n'alimentant pas en carburant ce cylindre.

On peut aussi couper l'alimentation des moyens d'allumage du cylindre désactivé.

Les autres caractéristiques et avantages de l'invention vont apparaître à la lecture de la description qui va suivre, donnée à titre uniquement illustratif et non limitatif, et à laquelle sont annexées :
- la figure 1 qui montre un moteur à combustion interne utilisant le procédé selon l'invention et
- la figure 2 qui est un graphique illustrant les lois de levées (L) des soupapes en fonction des différentes positions du piston (V), selon l'art antérieur (en traits pointillés) et selon l'invention (en traits forts).

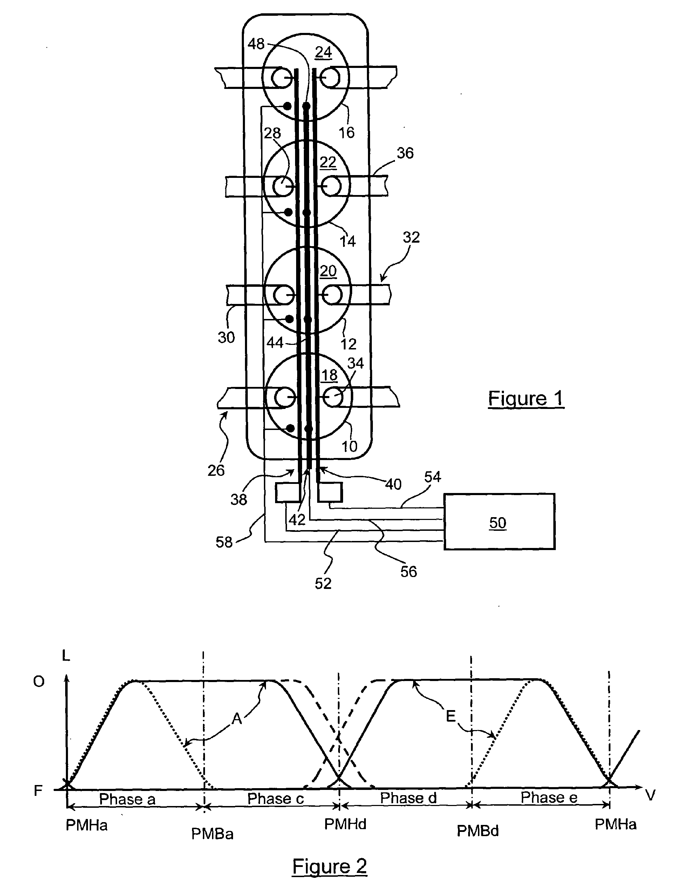

La figure 1 illustre un exemple de réalisation de l'invention non limitative avec un moteur à combustion interne, du type à injection directe de carburant, notamment moteur de type Essence.
Ce moteur comporte au moins deux cylindres, ici quatre cylindres 10, 12, 14, 16, à l'intérieur desquels coulisse un piston (non représenté) dans un mouvement rectiligne alternatif en étant relié à un vilebrequin (également non représenté). Le piston délimite ainsi avec le cylindre une chambre de combustion 18, 20, 22, 24 où peut se réaliser la combustion d'un mélange carburé lorsque les conditions d'une telle combustion sont réunies. Ce piston oscille donc entre une position haute, dite point mort haut (PMH), pour laquelle la chambre de combustion occupe un volume réduit et une position basse, dite point mort bas (PMB), où le volume de la chambre de combustion est le plus important. Chaque cylindre comprend des moyens d'admission 26 avec une soupape d'admission 28 contrôlant une tubulure d'admission 30 et des moyens d'échappement 32 avec une soupape d'échappement 34 et une tubulure d'échappement 36.
Les soupapes d'admission 28 et d'échappement 24 sont commandées en ouverture et en fermeture par des moyens d'actionnement 38, respectivement 40, permettant de faire varier les lois de levée de ces soupapes, en particulier au niveau de leurs moments d'ouverture et de fermeture, et ce indépendamment les unes des autres. Ces moyens sont mieux connus sous le sigle VVT (Variable Valve Timing) ou VVL (Variable Valve Lift).

Le moteur comprend également des moyens d'alimentation en carburant 42 permettant d'introduire du carburant dans chaque chambre de combustion des cylindres. A titre d'exemple, ces moyens comprennent une rampe d'injection 44 alimentant des injecteurs 46.

Les moyens d'admission 26 et d'échappement 32 ainsi que les moyens d'alimentation en carburant 42 débouchent dans les chambres de combustion dans le but d'y réaliser un mélange carburé pour la combustion de ce mélange. Avantageusement, des moyens d'allumage, comme une bougie 48, sont placés dans chaque cylindre pour pouvoir enflammer le mélange carburé présent dans les chambres de combustion.

Les moyens d'actionnement 38 et 40 des soupapes, les moyens d'alimentation en carburant 42 ainsi que les moyens d'allumage 48 sont pilotés par une unité de contrôle 50 par l'intermédiaire de lignes de commandes 52, 54, 56, 58. Cette unité contient des cartographies ou des tables de données qui permettent de modifier, en fonction des conditions de fonctionnement du moteur, comme le régime du moteur ou sa charge, les lois de levée des soupapes. Cette unité permet également de contrôler les paramètres d'injection de carburant tant au niveau de l'alimentation ou de la non alimentation en carburant de chaque injecteur qu'au niveau du temps d'injection pour chaque injecteur en commandant le moment et la durée d'injection de carburant dans le cycle de fonctionnement du moteur. De même, cette unité permet de commander les paramètres des moyens d'allumage, comme l'alimentation électrique de la bougie et/ou sa coupure d'alimentation, le moment de cette alimentation ainsi que la durée de l'étincelle fournie par cette bougie.

On se rapporte maintenant, en plus, à la figure 2 qui montre les lois de levée des soupapes d'admission (A) et d'échappement (E) selon l'invention (en traits pleins) et selon l'art antérieur (en traits pointillés) durant un cycle de fonctionnement du moteur, c'est-à-dire lors des quatre phases de fonctionnement : admission (Phase a) - compression (Phase c) - détente (Phase d) - échappement (Phase e).
Selon le fonctionnement du moteur de l'art antérieur, les soupapes A et E d'un cylindre inactif, dont les lois de levées sont représentées en traits pointillés entre une position de pleine fermeture (F) et une position de pleine ouverture (O) sont commandées d'une façon telle que la soupape d'admission A d'un cylindre inactif s'ouvre au voisinage du point mort haut admission du piston (PMHa) alors que la soupape d'échappement E de ce même cylindre est fermée. Au voisinage du point mort bas admission de ce piston (PMBa), la soupape d'admission se ferme en ayant autorisé, entre ces deux points, l'admission, dans la chambre de combustion, d'un fluide, tel que de l'air éventuellement suralimenté ou un mélange d'air et de gaz recirculés (EGR). Cette soupape reste fermée entre le PMBa et le point mort haut détente (PMHd) du piston permettant ainsi la compression de l'air admis par le piston. Durant cet intervalle PMBa-PMHd, l'unité de contrôle 48 commande l'injecteur 46 du cylindre concerné de façon à ce que du carburant ne soit pas injecté dans la chambre de combustion durant le mouvement du piston et/ou au voisinage du PMHd de manière à ne pas y réaliser un mélange carburé. Entre ce PMHd et le point mort bas détente (PMBd), la soupape d'admission est maintenue fermée et le piston a un mouvement allant du PMHd au PMBd. Tout en maintenant la soupape d'admission A dans sa position de fermeture, la soupape d'échappement E s'ouvre au voisinage du PMBd en permettant ainsi au fluide contenu dans la chambre d'être évacué hors de cette chambre jusqu'à la fermeture de cette soupape d'échappement au voisinage du PMHa. A partir de ce point, le cycle se répète selon le même cheminement tant que la nécessité de rendre un cylindre inactif est requise.

Comme déjà évoqué, lors du fonctionnement de ce moteur à faibles charges ou à charges partielles, une partie des cylindres 10, 12, 14, 16 est rendue inactive en y coupant l'injection de carburant tout en gardant l'autre partie des cylindres en activité grâce au maintien des paramètres d'injection et éventuellement d'allumage.

A titre d'exemple, dans le cas d'un fonctionnement du moteur selon une séquence, dite 1, 3, 4, 2, pour laquelle le cylindre 10 est en phase de détente, puis le cylindre 14, puis le cylindre 16 et enfin le cylindre 12, il est prévu de désactiver les cylindres 10 et 16. Pour ce faire, l'unité de contrôle 50 agit sur les moyens d'alimentation en carburant 42 des cylindres inactifs 10 et 16 en coupant l'injection de carburant dans les chambres de combustion 18 et 24 de ces cylindres. Avantageusement, l'unité coupe également l'alimentation électrique des bougies 48 de ces cylindres inactifs, ce qui permet d'éviter de consommer inutilement de l'énergie électrique.

Cette unité de contrôle agit également sur les moyens de commandes 38 et 40 des soupapes d'admission 28 et d'échappement 34 de ces cylindres inactifs, comme cela est mieux explicité dans la suite de la description.

Comme mieux illustré sur la figure 2 en traits pleins, l'unité de contrôle 48 commande les moyens d'actionnement 38 et 40 de manière à ce que la soupape d'admission A s'ouvre au voisinage du PMHa alors que la soupape d'échappement E est fermée. Cette soupape d'admission reste ouverte au voisinage du PMBa pour ensuite se fermer au voisinage du PMHd.
Ainsi, durant la course d'admission du piston entre le PMHa et le PMBa (phase a), de l'air frais (ou de l'air suralimenté avec éventuellement de l'EGR) est introduit dans la chambre de combustion du cylindre inactif. Cet air, au lieu d'être comprimé, est évacué au travers de la soupape d'admission ouverte lors du mouvement du piston entre le PMBa et le PMHd (phase c). De ce fait, de l'air frais est introduit dans la chambre et ce même air est évacué de cette chambre sans avoir subi de transformation tant au niveau de sa pression que de sa température. De plus, les effets négatifs dus au phénomène de pompage du piston et la résistance générée habituellement par la compression de l'air admis sont réduits.
Dans la suite du cycle de fonctionnement de ce cylindre inactif, la soupape d'échappement E s'ouvre au niveau du PMHd et la soupape d'admission A reste dans sa position de fermeture. La soupape d'échappement est maintenu en ouverture au-delà du PMBd (phase d) puis se referme au voisinage du PMHa (phase e). De par l'ouverture de la soupape d'échappement et du mouvement du piston vers le bas du cylindre (phase d), des gaz d'échappement chauds contenus dans la voie d'échappement, comme les tubulures d'échappement ou le collecteur d'échappement connecté à ces tubulures, sont aspirés dans la chambre de combustion, au travers de cette soupape d'échappement. Lors du mouvement inverse du piston vers le PMHa (phase e), les gaz chauds contenus dans cette chambre sont évacués vers la voie d'échappement. Ainsi, seuls des gaz d'échappement chauds sont envoyés à la voie d'échappement et aucune quantité d'oxygène supplémentaire n'est envoyée dans cette voie.

Bien entendu, les cylindres actifs suivent le déroulement classique des phases pendant le fonctionnement décrit ci-dessus des cylindres inactifs.

De manière avantageuse, il est prévu de réaliser un croisement entre les soupapes d'admission et d'échappement au niveau du PMHd. Ce croisement permet de remplacer l'air frais contenu dans la chambre de combustion à la fin de la phase c et de le remplacer par des gaz brûlés. Ainsi, seuls des gaz brûlés sont présents à la fin de la phase c, au lieu d'un mélange d'air frais et de gaz brûlés. Ceci permet d'éviter d'envoyer de l'oxygène dans la voie d'échappement.
Pour réaliser ce croisement, la soupape d'admission A reste ouverte au-delà du PMHd (de quelques dizaines de degrés d'angle de vilebrequin après ce point mort haut) et la soupape d'échappement E s'ouvre bien avant la PMHd (également de quelques dizaines de degrés d'angle de vilebrequin mais avant ce même point mort haut), comme illustré par des tirets sur la figure 2. Etant donné que la pression des gaz brûlés dans la voie d'échappement est supérieure à la pression de l'air frais contenu dans la chambre de combustion au voisinage de la fin de la phase c, ces gaz brûlés entrent dans la chambre de combustion lors de l'ouverture de la soupape d'échappement en effectuant un balayage de cet air frais. Plus précisément, ces gaz brûlés chassent l'air frais vers la soupape d'admission d'où il ressort vers la tubulure d'admission et seuls des gaz brûlés sont présents dans la chambre de combustion lorsque le piston entame son mouvement de la phase d, du haut du cylindre vers le bas.

La présente invention n'est pas limitée à l'exemple de réalisation décrit mais englobe tous équivalents ou variantes.
Notamment, la description qui précède s'applique aussi aux moteurs suralimentés ou non, à injection directe ou indirecte et notamment aux moteurs à allumage commandé.

## Revendications

1. Procédé pour contrôler l'admission et/ou l'échappement d'au moins un cylindre désactivé (10, 12, 14, 16) d'un moteur à combustion interne fonctionnant selon quatre phases, ledit cylindre comprenant des moyens d'admission avec une soupape d'admission (28), des moyens d'échappement avec une soupape d'échappement (34), un moyen d'injection de carburant (42), des moyens d'allumage (48) et un piston coulissant à l'intérieur de ce cylindre entre une position correspondant à son point mort haut (PMHa, PMHd) et une position correspondant à son point mort bas (PMBa, PMBd), **caractérisé en ce que**, pour le fonctionnement du moteur avec des faibles charges ou des charges partielles :
- on ouvre une des soupapes (28, 34) du cylindre désactivé au voisinage d'un point mort haut (PMHa, PMHd),
- on ferme cette soupape au voisinage du point mort haut suivant (PMHd, PMHa).

2. Procédé selon la revendication 1, **caractérisé en ce qu'**on ouvre la soupape d'échappement (34) au voisinage d'un point mort (PMHd) correspondant au début de la phase de détente du moteur, de façon à admettre des gaz d'échappement dans le cylindre inactif.

3. Procédé selon l'une des revendications 1 à 2, **caractérisé en ce qu'**on ouvre l'une (34) des soupapes successivement à la fermeture de l'autre (28) des soupapes.

4. Procédé selon l'une des revendications 1 à 2, **caractérisé en ce qu'**on réalise un croisement entre la soupape d'échappement (34) et la soupape d'admission (28) du cylindre désactivé de façon à réaliser un balayage de l'air frais dans le cylindre inactif.

5. Procédé selon la revendications 1, **caractérisé en ce qu'**on désactive au moins un cylindre en n'alimentant pas en carburant ce cylindre.

6. Procédé selon la revendication 1, **caractérisé en ce qu'**on coupe l'alimentation des moyens d'allumage du cylindre désactivé.
